# EUROPÄISCHE PATENTSCHRIFT

(11) **EP 0 654 630 B1**
(45) Veröffentlichungstag und Bekanntmachung des Hinweises auf die Patenterteilung: **07.01.1998**
(21) Anmeldenummer: 94250120.6
(22) Anmeldetag: 10.05.1994
(51) Int. Cl.: F16L 55/162

(54) **Gerät zur Verwendung beim Abdichten von wasserführenden Kreisläufen in Rohrleitungen und Behältern**
Device for sealing water pipe circuits and vessels
Dispositif pour étanchéifier des conduites et des réservoirs de circulation d'eau

(30) Priorität: 23.11.1993 DE 4340789
(43) Veröffentlichungstag der Anmeldung: 24.05.1995
(73) Patentinhaber: Klieboldt, Wilhelm, D-36323 Grebenau (DE)
(72) Erfinder: Klieboldt, Wilhelm, D-36323 Grebenau (DE)
(74) Vertreter: Meys, Hildegard, Dr.rer.nat.

(56) Entgegenhaltungen:
- DE-A- 3 844 485
- US-A- 4 246 466

## Beschreibung

Gegenstand der Erfindung ist ein Gerät, das beim Abdichten von wasserführenden Kreisläufen in Rohrleitungen und Behältern mittels Dichtmitteln auf Basis von Wasserglas enthaltenden Dichtflüssigkeiten zweckmäßig einsetzbar ist.

Wenn Abdichtmittel auf Basis von Wasserglas als Dichtflüssigkeit für Rohrleitungen und Behältnisse, wie sie beispielsweise in der DE-PS 31 30 282 des Anmelders beschrieben sind, benutzt werden, wird in der Regel die entsprechend dosierte Dichtflüssigkeit im Vorratsbehälter auf vorbestimmte Temperatur erwärmt, ehe sie durch die entsprechend vorbereitete, z.B. entleerte und gegebenenfalls gereinigte abzudichtende Rohrleitung bzw. einen Rohrleitungsabschnitt und/oder einen Behälter geführt wird. Es ist dabei für die optimale Bearbeitung der Undichtigkeit wichtig, daß die Zusammensetzung der Dichtflüssigkeit während der Behandlungsdauer möglichst unverändert bzw. geregelt eingestellt bleibt und daß die gewünschte Temperatur der Dichtflüssigkeit während des Behandlungsvorgangs in vorgeschriebener Weise gehalten bzw. geregelt werden kann. Dazu werden für die Behandlung solcher abzudichtender Leitungen oder Behälter mit Dichtflüssigkeit gebräuchlicherweise am Arbeitsort aus mehreren Kleingeräten bestehende Anlagen auf- und zusammengebaut, die während des Abdichtvorganges entsprechend betrieben und nach erfolgter Abdichtung wieder abgebaut und einzeln verstaut werden.

Aus DE-A- 38 44 485, die den nächstkommenden Stand der Technik bildet ist eine Vorrichtung für die Verarbeitung von flüssigen wasserglashaltigen Dichtmitteln bekannt, die einen mit eingebautem thermostatisiertem Elektroheizstab bestückten Vorratstank für die Dichtflüssigkeit aufweist, aus dem bzw. in den im Betrieb die Dichtmittelflüssigkeit mittels auf den Flüssigkeitsspiegel im Vorratsbehälter mit Druckluftkompressor aufgebrachter Druckluft durch angeschlossene Verbindungsschläuche ab- bzw. wieder eingeleitet wird. Der Elektroheizstab ist von der Dichtflüssigkeit vollständig umspült und hat über deren Benetzungsschicht direkt Kontakt mit der Dichtflüssigkeit.

Der Erfindung liegt die Aufgabe zugrunde, ein mobiles, kompaktes Gerät zur Verwendung beim Abdichten solcher wasserführenden Kreisläufe in Rohrleitungen und Behältern zu schaffen, das eine einfache Handhabung erlaubt und so konzipiert ist, daß es als einzelnes Kompaktgerät den für den Abdichtungsvorgang erforderlichen Funktionen zu genügen vermag.

Diese Aufgabe wird gemäß der Erfindung gelöst mit einem Gerät mit den im Anspruch 1 angegebenen Merkmalen. Weitere Merkmale der Erfindung ergeben sich aus den Unteransprüchen.

Das erfindungsgemäße Gerät ermöglicht bedienungsfreundliche Handhabung, einfachen Transport zum Einsatzort und zurück; es erfordert nur die am Arbeitsort vorhandenen Rohrleitungszu- und Abflußanschlüsse der Installation und benötigt im wesentlichen im allgemeinen keinen einsatzbedingten Anlagenaufbau. Das erfindungsgemäße Gerät hat darüber hinaus den Vorteil, daß es pflegeleicht ist und ohne Aufwand ständig einsatzbereit gehalten werden kann, so daß es für dringende Arbeiten und in Notfällen unmittelbar zur Verfügung steht.

Das erfindungsgemäße Gerät wird nachstehend anhand der Zeichnung an Ausbildungsbeispielen erläutert. Es zeigen:
- Fig. 1: eine Vorderansicht auf ein erfindungsgemäßes Gerät,
und
- Fig. 2: eine teilweise im Schnitt gezeichnete Seitenansicht eines erfindungsgemäßen Gerätes.

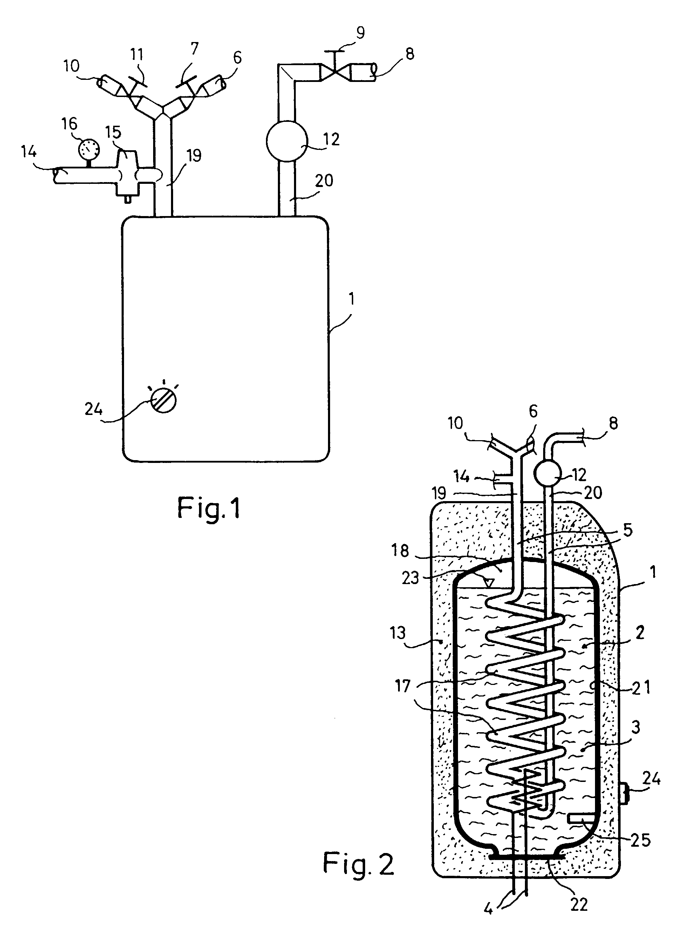

Das erfindungsgemäße Gerät umfaßt ein vorzugsweise aus Blech oder gewünschtenfalls auch aus Kupfer oder Stahl gefertigtes im wesentlichen rechteckiges Behältnis 1 (siehe Fig. 1), dessen ebenfalls im wesentlichen rechteckiger Innenraum 2 abgerundete Kanten aufweist (siehe Fig. 2). Zwischen der Außenwand des Behältnisses 1 und dem Innenraum 2 ist eine Wärmeisolierungsschicht 13 aus üblichem Wärmedämmaterial angeordnet, und der Innenraum 2 ist zweckmäßig mit einem Mantel 21 aus Kupfer oder V2A-Stahl ummantelt. Am Boden 22 des Innenraums 2 ist eine Heizeinrichtung 4 vorhanden, die als elektrische Widerstandsheizung ausgebildet ist, die über (nicht gezeigte) elektrische Leiter und Stecker an eine an jedem Arbeitsort vorhandene übliche Stromquelle angeschlossen werden kann. Der Innenraum 2 ist teilgefüllt mit einem wärmeübertragenden Medium, bei der Ausführungsform der Fig. 2 mit einem flüssigen Wärmeträger 3. Oberhalb des Flüssigkeitsspiegels 23 des Wärmeträgers 3 ist ein mit Gas, z.B. Luft gefüllter flüssigkeitsfreier Raum 18 vorhanden, in den hinein sich der Wärmeträger 3 bei Erwärmung ausdehnen kann. Als Wärmeträger wird ein für diesen Zweck bekanntes Medium eingesetzt, das im Bereich der üblichen Arbeits- und Lagertemperaturen, das ist normalerweise im Temperaturbereich zwischen etwa -10 bis +100°C, stabil ist, sich nicht zersetzt und seinen Aggregatzustand nicht ändert. Erfindungsgemäß kann Wasser als wärmeübertragendes Medium vorhanden sein, das dann zweckmäßigerweise ein Kälteschutzmittel enthält. Es kann auch ein organisches Wärmeübertragungsmittel, z.B. Glykol, Glyzerin oder ein dafür bekanntes Öl und/oder Gemische solcher Mittel, auch mit Wasser, sofern solche Gemische im vorgesehenen Temperaturbereich stabil sind, als Wärmeträger eingesetzt werden.

Die Größe des Gasraumes 18 oberhalb des Wärmeträgers 3 im Innenraum 2 wird entsprechend dem Ausdehnungsverhalten des eingesetzten Wärmeträgers eingestellt. Zwecks optimaler Wärmeübertragung wird der Gasraum 18 zwar so gering wie möglich gehalten, kann jedoch - je nach Natur des Wärmeträgers und aus Sicherheitsgründen - gegebenenfalls bis zu 1/4 des Rauminhaltes des Innenraums 2 ausmachen.

Die Temperatur, auf die der Wärmeträger mittels der Heizeinrichtung 4 erwärmt werden soll, wird wie üblich, zum Beispiel thermostatisch geregelt.Dafür sind entsprechend geeignete Schalt- und Steuerungseinrichtungen konventioneller Art vorhanden, von denen ein Reglerknopf 24 und ein Temperaturbegrenzer 25 gezeigt sind. Es können übliche (nicht gezeigte) optische und/oder akustische Signalanzeiger vorhanden sein.

Im Boden 22 des Innenraums 2 oder in Bodennähe seitlich ist darüberhinaus eine (nicht gezeigte) Ein- und Auslaßleitung für das Einfüllen und Ablassen des Wärmeträgers in den bzw. aus dem Innenraum 2 bei Wartung des Gerätes oder beim Auswechseln des Wärmeträgers z.B. bei Änderung der Arbeitsbedingungen, für die das Gerät benötigt wird, vorgesehen, die mit entsprechenden Absperreinrichtungen und gewünschtenfalls Uberlastungssicherung bestückt ist.

Es ist eine Durchfluß- bzw. Durchlauf-Rohrleitung 5 vorhanden, durch die die Dichtflüssigkeit für die abzudichtende Rohrleitung hindurch geleitet wird, bevor man sie in den Leitungskreislauf der abzudichtenden Leitung einbringt. Die Durchfluß-Rohrleitung 5 ist in ihrem im Innenraum 2 angeordneten Teil U-förmig innerhalb des Wärmeträgers 3 angeordnete, und einer der U-Schenkel ist als Rohrwendel 17 ausgebildet, wodurch die Erwärmungsfläche für die Dichtflüssigkeit optimiert wird. Die Durchfluß-Rohrleitung 5 ist mit ihren beiden U Schenkeln durch den Innenraum-Mantel 21 hindurch geführt und damit fest verbunden, z.B. verlötet angeordnet und ist durch die Wärmeisolierungsschicht 13 hindurch aus dem Behälter 1 herausgeführt. Sie weist an dem einen äußeren Rohrleitungsteil 19 eine Einlaßleitung 6 mit Absperreinrichtung 7 sowie einer Zuflußleitung 10 mit Absperreinrichtung 11 auf und ist an dem anderen äußeren Rohrleitungsteil 20 mit einer Auslaßleitung 8 mit Absperreinrichtung 9 versehen. In Reihe mit dem Rohrleitungsteil 20 und der Auslaßleitung 8 ist weiterhin eine Vorrichtung 12 zur Aufrechterhaltung des Dichtflüssigkeits-Kreislaufs angeordnet, zum Beispiel eine Pumpeinrichtung, mit der die erwärmte Dichtflüssigkeit durch das System gepumpt wird, nachdem das erfindungsgemäße Gerät an die Installation der abzudichtenden Rohrleitung angeschlossen und in Betrieb genommen worden ist.

Der Anschluß an die abzudichtende Rohrleitung, speziell eine Trinkwasserleitung, erfolgt über Verbindungen der Einlaßleitung 6 und der Auslaßleitung 8 mit den vor Ort vorhandenen Zu- bzw. Abflüssen der Installation der abzudichtenden Leitung, zweckmäßig über Schlauchzwischenstücke.

Es ist zusätzlich eine mit Absperreinrichtung 15 und Manometer 16 bestückte Druck-Zuführung 14 vorhanden, die in das äußere Rohrleitungsteil 19 der Durchlauf-Rohrleitung 5 eingebaut ist. Dies ermöglicht das Arbeiten unter Druck, was vorteilhaft ist, wenn die abzudichtenden Undichtigkeiten sehr gering sind, z.B. sehr dünne Materialrisse und sonstige nicht sichtbare Leckagen abzudichten sind.

Es läßt sich durch Arbeiten unter Druck in solche Risse eingedrungenes Leitungswasser leichter und sicherer verdrängen und eingeleitetes Dichtmittel an solchen Stellen sicher durch die Rohrwandung hindurch nach außen pressen, so daß es an der Außenseite des abzudichtenden Leitungsrohres abtrocknen und erhärten und somit das Rohr dauerhaft abdichten kann. Es kann außerdem beim Arbeiten unter Druck festgestellt werden, ob während des Behandlungsvorganges größere Mengen an Dichtmittel verloren gehen, z.B. beim Abdichten von größeren Leckagen. Dies macht sich durch Druckabfall bemerkbar, was am vorhandenen Manometer 16 ablesbar ist.

Es hat sich gezeigt, daß der Druck zweckmäßig auf 4 - 8 bar einzustellen ist, und es wird zweckmäßig eine (nicht gezeigte) Uberdruck-Sicherung vorgesehen.
Der Druck kann als Wasserdruck oder mittels Druckluft aufgebracht werden.

Durch die Zuflußleitung 10 wird bei geöffneter Absperreinrichtung 11 zu Beginn der Behandlung eine vorberechnete Menge an Dichtmittel in die Durchfluß-Rohrleitung 5 eingespeist. Mittels der in üblicher Weise elektrisch betriebenen, über nicht gezeigte Leitungsorgane mit dem Stromnetz verbundenen und über nicht gezeigte Steuerorgane betätigten Pumpeinrichtung 12 wird das Dichtmittel innerhalb der Durchfluß-Rohrleitung 5 durch den Innenraum 2 des erfindungsgemäßen Geräts geführt, darin auf die vorgesehene Temperatur, z.B. 65°C erwärmt und dann bei geöffneter Absperreinrichtung 9 durch die Auslaßleitung 8 in die entleerte abzudichtende Rohrleitung geführt und diese entlüftet. Wenn die abzudichtende Rohrleitung durchströmt ist und die Dichtflüssigkeit durch die (geöffnete) Absperrung 7 in den Einlaß 6 einfließt, kann die Absperreinrichtung 11 geschlossen werden. Mittels des über die Leitung 14 aufgegebenen Druckes und der Pumpeinrichtung 12 wird der Durchfluß der Dichtflüssigkeit durch die abzudichtende Rohrleitung über die gewünschte Zeitspanne, gegebenenfalls mehrere Tage lang, aufrecht erhalten. Wenn infolge Abdichtung größerer Undichtigkeiten im Laufe des Betriebs Dichtflüssigkeit nach außen verloren geht, was sich durch Druckabfall im System bemerkbar macht und am Manometer 16 ablesbar ist, kann durch öffnen der Absperreinrichtung 11 durch die Zuflußleitung 10 eine entsprechende ergänzende Menge an Dichtflüssigkeit nachgefüllt werden.

Die Dichtflüssigkeit bleibt während der gesamten Behandlungsdauer, auch über mehrere Tage, konstant erwärmt auf die in einem Temperaturbereich von z.B. 40 - 95°C eingestellte Temperatur, da sie gleichförmig durch die Durchfluß-Rohrleitung 5 in dem entsprechend temperiertes wärmeübertragendes Medium 3 enthaltenden Innenraum 2 zirkuliert wird. Die Konzentration der Dichtflüssigkeit und deren Menge im System können durch entsprechende Regulierung der ergänzenden Zuleitung durch den Zufluß 10 relativ konstant gehalten werden. Eine sichere Abdichtung aller Leckagen ist so gewährleistet.

Das erfindungsgemäße Gerät läßt sich gewünschtenfalls auch für das Entleeren und Trocknen einer abzudichtenden Rohrleitung vor dem Abdichtungsvorgang einsetzten, wenn die Absperreinrichtung 7 als Dreiwegeventil ausgebildet ist oder wenn ein gesondertes Entleerungsventil eingebaut ist. Bestückt mit einem Dreiwegeventil wird das erfindungsgemäße Gerät wie oben beschrieben an die zu entleerende z.B. Wasserleitung angeschlossen, das Absperrventil 9 wird geöffnet und das Dreiwegeventil 7 wird auf Mittelstellung eingestellt, so daß die Einlaßleitung 6 geschlossen ist und das in der zu entleerenden Wasserleitung vorhandene Wasser nach dem Einschalten der Pumpeinrichtung 12 durch den am Ventil 7 in Offenstellung befindlichen Wasserleitungsanschluß der zu entleerenden Wasserleitung nach außen ins Freie gepumpt wird. Durch Zuschalten von Druckluft durch die Zuführung 14 kann das Entleeren gefördert werden, und es kann - wenn das wärmeübertragende Medium 3 entsprechend erhitzt wird - das zu entleerende und nachfolgend abzudichtende Rohrsystem zusätzlich getrocknet werden, weil sich die Druckluft in dem U-förmigen Teil durch Durchlauf-Rohrleitung 5 entsprechend erwärmen läßt.

In entsprechender Weise lassen sich mit Hilfe des erfindungsgemäßen Gerätes auch Spülflüssigkeiten oder sonstige Reinigungsflüssigkeiten, mit denen man die abzudichtende Rohrleitung gegebenenfalls vorzubehandeln wünscht, verarbeiten.

In jedem Fall ermöglicht das erfindungsgemäße Gerät ein kontinuierliches Arbeiten unter gleichförmigen Bedingungen über beliebig lange Zeiträume, wobei gegebenenfalls auftretende Flüssigkeitsverluste von Spül-, Reinigungs- oder sonstigen Behandlungsflüssigkeiten ebenso ausgeglichen werden können, wie dies zuvor im Zusammenhang mit der Verarbeitung der Dichtflüssigkeit beschrieben wurde.

Das erfindungsgemäße Gerät, das in der Zeichnung in im wesentlichen rechteckiger Form veranschaulicht ist, kann verschiedene Gestalt und Größe haben, z.B. kugelförmig oder als zylindrischer Behälter geformt sein. Es kann als einteiliger Behälter hergestellt sein oder - in an sich bekannter Weise - aus Einzelteilen, z.B. Seitenwandteilen, Deckel- und/oder Bodenteil zusammengebaut sein, die durch Schweißverbindung oder andere Verbindungsmittel fest oder gewünschtenfalls lösbar zusammengebaut sind. Der ummantelte Innenraum kann als gesonderter Behälter gefertigt und ausbaubar sein, und dessen Boden kann lösbar befestigt sein, was sich empfiehlt, wenn mineralienhaltiges Wasser als wärmeübertragendes Medium eingesetzt werden soll, dessen Ablagerungen von Zeit zu Zeit gegebenenfalls mechanisch von den im Innenraum befindlichen Geräteteilen entfernt werden sollen.

Zur zweckmäßigen Handhabung können an der Außenseite des erfindungsgemäßen Gerätes Tragevorrichtungen, wie Leisten und/oder Griffe und/oder Rollen und dergleichen angeordnet sein. Es kann gewünschtenfalls das erfindungsgemäße Gerät auf einem mit Rollen oder Rädern ausgerüsteten Support installiert eingesetzt werden. Die Vorrichtung 12 kann gewünschtenfalls unterhalb oder neben dem Boden des Behältnisses 1 auf dem Support angeordnet sein. Es können gewünschtenfalls mehrere erfindungsgemäße Geräte in Reihe geschaltet gemeinsam eingesetzt werden.

## Patentansprüche

1. Gerät zur Verwendung beim Abdichten von wasserführenden Kreisläufen in Rohrleitungen und Behältern mit flüssigen, wasserglashaltigen Dichtmitteln, das einen mindestens teilweise mit Flüssigkeit gefüllten Innenraum (2) in einem Behältnis (1) sowie eine Heizeinrichtung (4) im Innenraum (2) und eine Vorrichtung (12) zur Aufrechterhaltung des Dichtmittel-Flüssigkeitskreislaufs außerhalb des Innenraums (2) aufweist, dadurch gekennzeichnet, daß der Innenraum (2) ein organisches Wärmeübertragungsmittel und/oder Wasser als geregelt heizbares wärmeübertragendes Medium (3) enthält und im Innenraum (2) eine U-Form aufweisende Durchlauf-Rohrleitung (5) für das Dichtmittel vorhanden und mindestens einer von deren U-Schenkeln als Rohrwendel (17) ausgebildet ist, und daß die Durchlauf-Rohrleitung (5) mit außerhalb des Innenraums (2) befindlichem Einlaß (6 und/oder 10) mit Absperreinrichtung (7 und/oder 11) und Auslaß (8) mit Absperreinrichtung (9) bestückt und die Vorrichtung (12) zur Aufrechterhaltung des Dichtmittel-Flüssigkeitskreislaufs in der Durchlauf-Rohrleitung (5) außerhalb des Innenraums (2) angeordnet ist.

2. Gerät nach Anspruch 1, dadurch gekennzeichnet, daß eine mit Absperreinrichtung (15) und Manometer (16) ausgerüstete Druck-Zuführung (14) in die Durchlauf-Rohrleitung (5) vorhanden ist.

3. Gerät nach einem der vorhergehenden Ansprüche, dadurch gekennzeichnet, daß zwischen der Außenwand des Behähtnisses (1) und dem Innenraum (2) eine Wärmeisolierungsschicht (13) vorhanden ist.

## Claims

1. Device to be used for sealing water conducting circuits in pipelines and vessels by means of liquid sealing agents containing water-glass which comprises an inner space (2) within a vessel (1) filled at least partially with a liquid as well as a heating device (4) in the inner space (2) and a device (12) for maintaining the sealing agent/fluid circuit outside of the inner space (2), characterised in that the inner space (2) contains an organic heat exchanging agent and/or water as a heat exchanging medium (3) heatable in a controlled manner, and in the inner space (2) there is provided a continuous pipeline (5) having U-shape for the sealing agent, at least one of its U-legs being shaped as a helical pipe (17), and that the continuous pipeline (5) is provided, outside of the inner space (2), with an inlet (6 and/or 10) with a shut off device (7 and/or 11) and with an outlet (8) with a shut off device (9), and the device (12) for maintaining the sealing agent/fluid circuit is arranged in the continuous pipeline (5) outside of the inner space (2).

2. Device as claimed in claim 1, characterised in that a pressure supply (14) comprising a shut off device (15) and a pressure gauge (16) is provided in the continuous pipeline (5).

3. Device as claimed in any one of the preceding claims, characterised in that between the outer wall of the vessel (1) and the inner space (2) there is provided a heat insulating layer (13).

## Revendications

1. Appareil destiné à être utilisé pour rendre étanche des circuits conducteurs d'eau dans des conduites et récipients à l'aide de moyens d'étanchéité liquides contenant du silicate de potasse, comprenant un espace intérieur (2) rempli au moins partiellement de liquide dans un récipient (1), ainsi qu'un moyen de chauffage (4) dans l'espace intérieur (2) et à l'extérieur de l'espace intérieur (2) un moyen (12) pour maintenir la circulation du moyen d'étanchéité liquide, caractérisé en ce que l'espace intérieur (2) contient un moyen organique transmetteur de chaleur et/ou de l'eau comme moyen (3) transmetteur de chaleur pouvant être chauffé de façon réglé et que dans l'espace intérieur (2) une conduite de circulation (5) pour le moyen d'étanchéité en forme de U est prévue et qu'au moins une des branches de l'U est conçue comme tube hélicoïdal (17) et que la conduite de circulation (5) est pourvue d'une entrée (6 et/ou 10), avec moyen d'arrêt (7 et/ou 11), se trouvant à l'extérieur de l'espace intérieur (2), et d'une sortie (8), avec moyen d'arrêt (9) et que le moyen (12) pour maintenir la circulation du moyen d'étanchéité liquide dans le tube de circulation (5) est disposé à l'extérieur de l'espace intérieur (2).

2. Appareil selon la revendication 1, caractérisé en ce qu'un dispositif d'adduction sous pression (14), pourvu de moyen d'arrêt (15) et d'un manomètre (16) est présent dans le tube de circulation (5).

3. Appareil selon une des revendications précédentes, caractérisé en ce qu'une couche d'isolation thermique (13) est prévue entre la paroi extérieure du récipient (1) et de l'espace intérieur (2).
